# EUROPÄISCHE PATENTSCHRIFT

(11) **EP 0 332 046 B1**
(45) Veröffentlichungstag und Bekanntmachung des Hinweises auf die Patenterteilung: **17.05.1995**
(21) Anmeldenummer: 89103623.8
(22) Anmeldetag: 02.03.1989
(51) Int. Cl.: G02B 6/36, G02B 6/42

(54) **Verfahren und Vorrichtung zum hermetischen Durchführen eines Lichtwellenleiters**
Method and apparatus for the hermetical feed-through of an optical-wave guide
Méthode et dispositif pour passage étanche d'un guide d'onde optique

(30) Priorität: 08.03.1988 DE 3807491
(43) Veröffentlichungstag der Anmeldung: 13.09.1989
(73) Patentinhaber: Schott Glaswerke, 55122 Mainz (DE); Carl-Zeiss-Stiftung trading as SCHOTT GLASWERKE, 55122 Mainz (DE)
(72) Erfinder: Paschke, Hartmut, D-8300 Ergolding (DE); Kreutzmann, Gerd, D-8300 Landshut (DE); Hack, Hrabanus, D-6500 Mainz (DE)
(74) Vertreter: Fuchs Mehler Weiss

(56) Entgegenhaltungen:
- EP-A- 274 222
- EP-A- 0 105 198
- DE-A- 3 431 748
- US-A- 4 119 363
- US-A- 4 357 072

## Beschreibung

Die Erfindung betrifft ein Verfahren und eine Vorrichtung zum hermetischen Durchführen eines von einer vorzugsweise mehrlagigen und vorzugsweise aus Kunststoff bestehenden Schutzschicht umhüllten, vorzugsweise flexiblen Lichtwellenleiters aus Glas durch eine Wand eines Gehäuses.

Häufig muß ein Lichtwellenleiter aus Glas hermetisch dicht durch eine z.B. metallische Wand eines Gehäuses geführt werden; das Gehäuse dient zum Beispiel zur hermetischen Abdichtung von optoelektronischen Bauteilen, die vor der Einwirkung korrosiver Medien, Luftfeuchte und dergleichen geschützt werden müssen.

Bei einer bekannten Vorrichtung zum hermetischen Durchführen eines Lichtwellenleiters (DE 34 31 748) sind zwei Durchführungselemente vorgesehen, die an der Wand bzw. dem Lichtwellenleiter abgedichtet befestigt und danach miteinander abgedichtet verbunden werden müssen. Das ist umständlich und zeitraubend und beinhaltet eine Reihe von Fehlermöglichkeiten.

Bei einer anderen bekannten Durchführung eines Lichtwellenleiters (US 4,357,072) wird der freigelegte Lichtwellenleiter metallisiert und mit der Wand metallisch dicht verlötet.

Das Metallisieren des aus Glas bestehenden Lichtwellenleiters ist aufwendig und kann leicht mit Fehlern behaftet sein. Ein Biegeschutz für den nach außen abgehenden Teil des Lichtwellenleiters ist nicht in einfacher Weise möglich.

In der EP-A-0 105 198 wird eine druckfeste und gasdichte Lichtwellenleiterdurchführung beschrieben, in welcher ein Lichtwellenleiter ohne umhüllende Schutzschicht mittels eines niedrigschmelzenden Glases in einer Durchführungshülse eingeschmolzen ist und an beiden Enden jeweils in ein Steckverbindungsteil mündet. Zur Durchführung des Lichtwellenleiters sind also ausgangs und eingangsseitig zwei Steckverbindungen vorgesehen, mit dem Nachteil der bei Verbindungen von Lichtwellenleitern unvermeidlich auftretenden Koppelverluste.

Die vorliegende Erfindung geht von der Aufgabe aus, ein Verfahren und eine Vorrichtung zum hermetischen Durchführen eines Lichtwellenleiters zu schaffen, die nur einen geringen Aufwand erfordern und gewünschte Eigenschaften der Durchführung sicherstellen, insbesondere hohe Zuverlässigkeit und Dichtigkeit, hohe mechanische Belastbarkeit, Freiheit in der Wahl des Wandmaterials und unverrückbare geometrische Fixierung, unter Vermeidung von Steckerverbindungen oder Spleißen.

Diese Aufgabe wird nach der Erfindung durch die Vorrichtung nach dem Anspruch 1 bzw. das Verfahren nach dem Anspruch 7 gelöst.

Bei der erfindungsgemäßen Vorrichtung wird durch die von einer Durchführungshülse umgebene Glaslötung eine mechanisch geschützte Abdichtung geschaffen, die gegen die allermeisten korrosiven Medien beständig ist und die für Glaslötungen typische hohe Dichtigkeit und Dauerhaftigkeit aufweist. Es sind nur einfache Bauteile und einfache Arbeitsschritte erforderlich, und auch der Zeitaufwand für die Herstellung der Durchführung ist gering. Es können ohne weiteres Glaslote mit verhältnismäßig niedrigen Verarbeitungstemperaturen unter 700°C, z.B. bei etwa 450°C, verwendet werden, so daß übliche Heizquellen, z.B. Strahlungswärme einer Heizspirale oder Induktionsheizung, ausreichen. Es macht auch keine Schwierigkeiten, bei der Herstellung der Glaslötung die Durchführungshülse, die normalerweise aus Metall besteht, erforderlichenfalls in bestimmten Bereichen zu kühlen, um Beschädigungen des Materials der Schutzschicht zu vermeiden.

Durch den Entlastungsabschnitt, in welchem der Lichtwellenleiter über die Schutzschicht an der Durchführungshülse befestigt ist, ist ein lückenloser Biegeschutz des aus der Durchführungshülse austretenden Teils des Lichtwellenleiters sichergestellt.

In dem meistens vorliegenden Fall, daß der Lichtwellenleiter eine mehrlagige Schutzschicht hat, genügt es, wenn der Lichtwellenleiter in einem aus der Durchführungshülse in das Innere des Gehäuses austretenden Abschnitt nur mit einer innersten Lage der Schutzschicht versehen oder sogar ganz frei von der Schutzschicht ist; in beiden Fällen kann in dem für die Glaslötung vorgesehenen zweiten Abdichtbereich die Durchführungshülse einen sehr kleinen inneren Durchmesser haben, so daß nur wenig Glaslot benötigt wird und die Glaslötung in kurzer Zeit und mit einer geringen Wärmemenge hergestellt werden kann und besonders zuverlässig abdichtet. Erforderlichenfalls kann der aus der Durchführungshülse in das Innere des Gehäuses austretende Abschnitt des Lichtwellenleiters in der Durchführungshülse mittels eines Einsatzes zentriert werden. Dadurch kann einer Beschädigung des Lichtwellenleiters im Austrittsbereich der Hülse vorgebeugt werden.

Vorzugsweise ist die Durchführungshülse in dem ersten Abdichtbereich mit der Wand des Gehäuses metallisch verlötet. Dadurch ergibt sich in einfacher Weise eine zuverlässige und mechanisch feste hermetisch dichte Verbindung. In der Regel genügt eine Weichlötung; zu ihrer Herstellung sind nur Temperaturen weit unterhalb der Verarbeitungstemperatur des Glaslotes erforderlich, so daß ein schädlicher Einfluß auf die bereits hergestellte Glaslötung sicher vermieden wird. Außerdem kann die Durchführungshülse so gestaltet sein, daß die beiden Abdichtbereiche weit auseinanderliegen, und es können beim Löten gewünschte Bereiche der Hülse gekühlt werden. Es versteht sich, daß für die Durchführungshälsen und die Wand Materialien zu wählen sind, die für das Löten geeignet sind. Erforderlichenfalls sind entsprechende Oberflächen-Beschichtungen vorzusehen; das ist aber normalerweise nicht erforderlich.

Vorzugsweise wird eine Glaslötung vorgesehen, die unter Druckvorspannung steht; dadurch ergibt sich eine oft erwünschte höhere Festigkeit gegen mechanische und thermische Belastungen. Die Höhe der Druckvorspannung kann durch die Wahl der verwendeten Materialien beliebig eingestellt werden. Es ist aber natürlich auch möglich, die Materialien so zu wählen, daß eine nicht unter Vorspannung stehende Glaslötung vorliegt.

Die Erfindung wird im folgenden an Hand von Ausführungsbeispielen in Verbindung mit der Zeichnung näher beschrieben.

Figur 1 erläutert schematisch die Verwendung einer erfindungsgemäßen Vorrichtung.

Figur 2 ist eine schematische, teilweise geschnittene Explosionsdarstellung einer erfindungsgemäßen Vorrichtung.

Figur 3 zeigt in einer schematischen Längsschnitt-Darstellung die Vorrichtung gemäß Figur 2 in eingebautem Zustand.

Figur 4 zeigt in ähnlicher Darstellung wie Figur 3 eine andere Ausführungsform. In Figur 4 sind Teile, die in entsprechender Form in Figuren 1 bis 3 vorkommen, mit denselben Bezugszeichen bezeichnet, jedoch unter Voranstellung der Ziffer 4. Insoweit wird, um Wiederholungen zu vermeiden, auch auf die Beschreibung zu Figuren 1 bis 3 Bezug genommen.

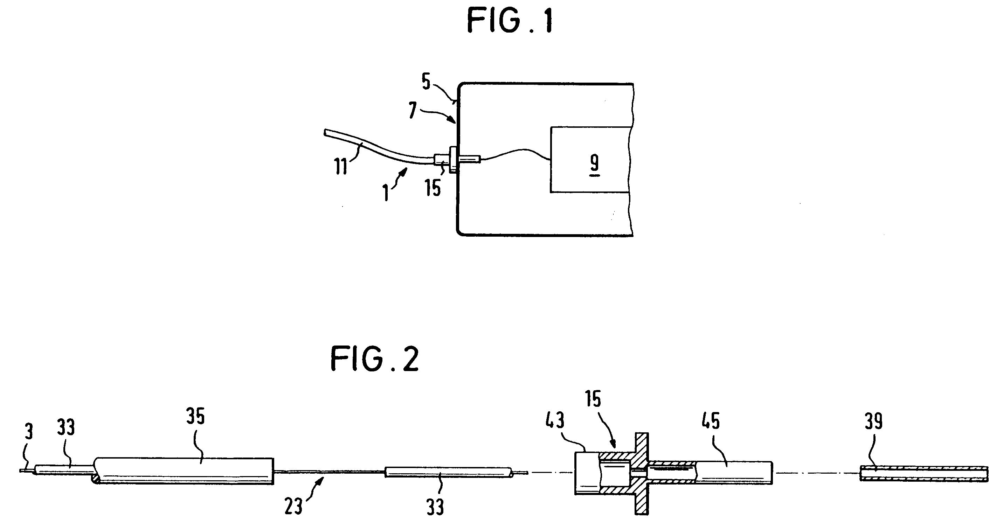

Figuren 1 bis 3 zeigen eine Vorrichtung 1 zum hermetischen Durchführen eines flexiblen Lichtwellenleiters 3 aus Glas durch eine metallische Wand 5 eines hermetisch dichten Gehäuses 7, in welchem der Lichtwellenleiter 3 an einer opto-elektronischen Einrichtung 9 angeschlossen ist. Der Lichtwellenleiter 3 ist in einem aus der Vorrichtung 1 nach außen führenden Abschnitt 11 mit einer Kunststoff-Schutzschicht 13 umgeben.

Die Vorrichtung 1 weist eine Durchführungshülse 15 auf, die in einer Öffnung der Wand 5 befestigt und in einem ersten Abdichtbereich 17 hermetisch gegen die Wand 5 abgedichtet ist, und zwar bei der dargestellten Ausführungsform durch eine metallische Lötung 15, vorzugsweise eine Weichlötung. Diese ist bequem herstellbar.

Der Lichtwellenleiter 3 ist durch die Durchführungshülse 15 geführt und hat darin einen von der Schutzschicht 13 freien Abschnitt 23, in welchem der aus Glas bestehende Lichtwellenleiter 3 in einem zweiten Abdichtbereich 25 der Durchführungshülse 15 mittels einer Glaslötung 27 hermetisch abgedichtet mit der Durchführungshülse 15 verbunden ist. In einem aus der Durchführungshülse 15 nach außen herausführenden Entlastungsabschnitt 29 ist der Lichtwellenleiter 3 über seine Schutzschicht 13 an der Durchführungshülse 15 befestigt, bei der dargestellten Ausführungsform mittels einer Verklebung 31, beispielsweise aus UV-härtbarem Kleber. Es ergibt sich so eine gegen Knickung gesicherte, vollständig geschützte Einführung des Lichtwellenleiters in das Gehäuse 7. Zu dem Inneren des Gehäuses 7 hin ist eine Zugentlastung normalerweise nicht erforderlich und bei der dargestellten Ausführungsform auch nicht vorgesehen. Es ist aber oft zweckmäßig, den Lichtwellenleiter 3 auch im Inneren des Gehäuses durch eine Schutzschicht gegen Knicken zu schützen, so daß er ohne besondere Vorsichtsmaßnahmen frei innerhalb des Gehäuses verlegt werden kann, wobei natürlich die Krümmungsradien wegen der Forderung, die Lichtverluste möglichst klein zu halten, nicht zu klein werden dürfen.

Bei der Ausführungsform nach Figuren 1 bis 3 ist die aus Kunststoff bestehende Schutzschicht 13 mehrlagig und enthält eine dünnere innere Lage 33 und eine dickere äußere Lage 35. Der aus der Durchführungshülse 15 in das Innere des Gehäuses 7 austretende Abschnitt 37 des Lichtwellenleiters 3 ist nur von der inneren Lage 33 umhüllt. Diese bietet auch allein noch einen ausreichenden Knickschutz. Die Verwendung nur der dünneren inneren Lage 33 hat den Vorteil, daß der innere Durchmesser der Durchführungshülse 15 in dem zweiten Abdichtbereich 25 entsprechend klein und dadurch die Menge des Glaslotes in der Glaslötung 27 entsprechend gering sein kann.

Bei der dargestellten Ausführungsform setzt sich die Glaslötung 27 zu dem gehäuseseitigen Ende der Durchführungshülse 15 hin in ein Glaslotrohr 39 fort, das sich als Biegeschutz unverschmolzen bis über einen Endabschnitt 41 der Schutzschicht erstreckt, so daß ein geschützter Übergang zwischen dem von der Schutzschicht freien Abschnitt 23 und dem wieder von einer Schutzschicht, hier nur von der inneren dünnen Lage 33, umgebenen, zu dem Inneren des Gehäuses 7 führenden Abschnitt 37 erzielt wird. Der auf dieser Weise geschützte Lichtwellenleiter kann flexibel innerhalb des Gehäuses 7 verlegt werden, ohne daß es erforderlich ist, auf die Vermeidung mechanischer Belastungen des Lichtwellenleiters, z.B. durch dilathermisch bedingte Spannungen, besonders zu achten.

Die dargestellte Durchführungshülse 15 ist einteilig und hat in einem bezüglich des Gehäuses 7 nach außen zu richtenden Endabschnitt 43 einen zum Aufnehmen der Schutzschicht 13 bemessenen inneren Durchmesser und in einem nach innen zu richtenden Endabschnitt 45 einen erheblich kleineren inneren Durchmesser, entsprechend dem dort vorliegenden Durchmesser des Lichtwellenleiters 3 ohne Schutzschicht 13 oder nur mit einer inneren Lage 33 der Schutzschicht.

Eine derartige Durchführungshülse 15 kann in einfacher Weise vorgefertigt werden, ist sehr einfach verwendbar und benötigt nur eine geringe Menge Glaslot zum Herstellen der Glaslötung 27.

Es ist vorteilhaft, wenn die Durchführungshülse 15 wenigstens einen Anschlag zur Begrenzung des Einführweges eines zum Herstellen der Vorrichtung 1 einzuführenden Bauteils aufweist. Dadurch sind besondere Maßnahmen zum genauen Positionieren des betreffenden Bauteils nicht erforderlich; man braucht den Bauteil nur bis zum Anschlag einzuführen. Bei der dargestellten Ausführungsform ist ein solcher Anschlag 47 für die Stirnfläche der Schutzschicht 13 vorgesehen. Die dargestellte Durchführungshülse 15 hat ferner einen Anschlag 49 für ihre Lokalisierung an der Wand 5. Das erleichtert das richtige Einsetzen der Durchführung.

Um Beschädigungen der Schutzschicht 13 zu vermeiden, wenn in den Abdichtbereichen 19 und 25 gelötet wird, ist bei der dargestellten Ausführungsform ein genügender Abstand zwischen der Schutzschicht 13 und den Abdichtbereichen 19, 25 vorgesehen, besonders zu dem zweiten Abdichtbereich 25, wo beim Glaslöten verhältnismäßig hohe Temperaturen auftreten.

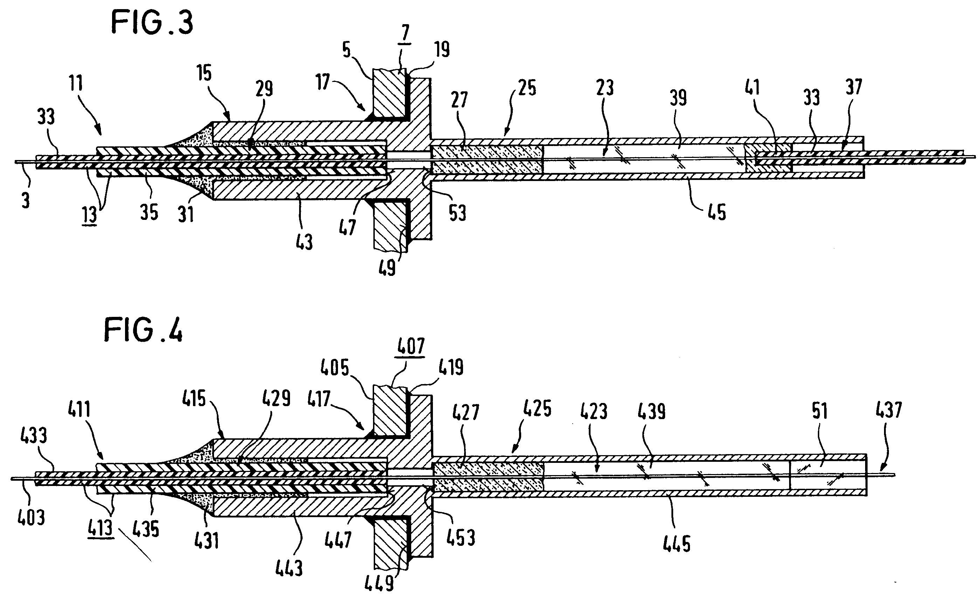

Figur 4 zeigt eine Ausführungsform, bei der auf dem zum Inneren des Gehäuses führenden Abschnitt 37 des Lichtwellenleiters 403 keine Schutzschicht vorgesehen ist. Dies vereinfacht die Herstellung der Durchführung. Besonders bei kurzen Verlegelängen innerhalb des Gehäuses 7 ist dort eine Schutzschicht entbehrlich. Es kann aber dann zweckmäßig sein, am gehäuseseitigen Ende der Durchführungshülse 415 einen zentrierenden Einsatz 51 vorzusehen.

Das Herstellen der erfindungsgemäßen Vorrichtung ist einfach. Ein Abschnitt 23 bzw. 423 des Lichtwellenleiters 3 bzw. 403 wird von der Schutzschicht 13 bzw. 413 befreit und sorgfältig gereinigt. Bei der Ausführungsform nach Figuren 2 und 3 wird auf dem daran anschließenden, in das Gehäuseinnere führenden Endabschnitt 37 eine dünne innerste Lage 33 der Schutzschicht 13 belassen; bei der Ausführungsform nach Figur 4 ist dort keinerlei Schutzschicht vorgesehen. Die vorgefertigte Durchführungshülse 15; 415 wird dann nach sorgfältiger Reinigung mit dem außenseitigen Endabschnitt 43; 443 voran auf den Lichtwellenleiter 3; 403 aufgeschoben, bis die Stirnfläche der Schutzschicht 13; 413 an dem Anschlag 47; 447 anliegt.

Das erforderliche Glaslot kann vorher als Paste an dem Abschnitt 23 bzw. 423 vorgesehen worden oder in den gehäuseseitigen Endabschnitt 45; 445 eingeführt worden sein. Die Handhabung ist jedoch einfacher, und die Menge des bereitgestellten Glaslotes genauer vorgegeben, wenn das Glaslot in Form eines Lotglasrohres 39 (Figuren 2 und 3) bzw. 439 (Figur 4) vorgesehen wird, das vor oder nach dem Einführen des Lichtwellenleiters in den gehäuseseitigen Endabschnitt 45; 445 der Durchführungshülse 15 bzw. 415 eingeführt wird. Bei den dargestellen Ausführungsformen ist dafür in der Durchführungshülse ein Anschlag 53 bzw. 453 vorgesehen.

Sodann wird durch Erwärmen der Durchführungshülse 15 bzw. 415 in Nachbarschaft des zweiten (Glaslöt-)Abdichtbereiches 25 bzw. 425 ein innenliegender Endabschnitt des Glaslotrohres 39 bzw. 439 mit dem Lichtwellenleiter-Abschnitt 23 bzw. 423 und der Durchführungshülse 15 bzw. 415 verschmolzen. Dadurch wird der Lichtwellenleiter hermetisch mit der Durchführungshülse verbunden.

Der Rest des Glaslotrohres 39 bzw. 439 bleibt als Knickschutz erhalten.

Danach wird die Durchführungshülse 15 bzw. 415 in die dafür vorgesehene Öffnung der Wand 5 bzw. 405 eingesetzt und hermetisch mit der Wand verbunden, z.B. wie beschrieben durch eine metallische Weichlötung. Die dafür erforderlichen Temperaturen, z.B. bei einem SnPb-Lot von etwa 200 bis 230°C, liegen ausreichend weit unter der Verarbeitungstemperatur des Lotglases von z.B. 450°, um eine schädliche Beeinflussung der bereits hergestellten Glaslötung 27 bzw. 427 zu vermeiden.

Danach wird an dem gehäusefernen Ende der Durchführungshülse die Schutzschicht 13 bzw. 413 mit der Durchführungshülse verbunden, z.B. wie beschrieben durch eine Verklebung 31 bzw. 431.

Nach dem Herstellen der gewünschten Anschlüsse kann das Gehäuse 7 hermetisch verschlossen werden, z.B. durch Auflöten einer Deckenwand (nicht dargestellt).

Zur Erzielung einer dichten und widerstandsfähigen Glaslötung 27 bzw. 427 ist es zweckmäßig, ein Glaslotrohr 39 bzw. 439 zu verwenden, das den Zwischenraum zwischen dem Lichtwellenleiter-Abschnitt 23 bzw. 423 und der Dichtungshülse 15 bzw. 415 möglichst vollständig ausfüllt. Bei der Ausführungsform nach Figuren 2 und 3 muß jedoch der Innendurchmesser des Glaslotrohres 39 so groß sein, daß das Glaslotrohr über die stehengebliebene innere Lage 33 der Schutzschicht 13 geschoben werden kann. Es ist deshalb zweckmäßig, diese innerste Lage so dünn wie möglich zu wählen, ohne daß die Schutzfunktion für die Glasfaser ernstlich gestört wird.

Vorzugsweise soll die innerste Lage 33 eine Dicke unter etwa 20 »m haben. Man erkennt aus Figur 3, daß sich das Glaslotrohr 39 bei genügender Länge bis über einen Endabschnitt der gehäuseseitigen Schutzschicht, d.h. hier der innersten Lage 33, erstreckt und dort einen Biegeschutz bildet, ähnlich wie bei der Ausführungsform nach Figur 4, bei der in diesem Bereich keine Schutzschicht vorgesehen ist.

Das Glaslotrohr 39 bzw. 439 kann erforderlichenfalls auch längsgeteilt vorgesehen werden, um das Aufbringen auf den Lichtwellenleiter-Abschnitt 23 bzw. 423 leichter zu ermöglichen. In jedem Fall bietet die Verwendung eines Glaslotrohres 39 bzw. 439 den Vorteil, daß eine genaue, positionierte Einführung einer Glaslotmenge möglich ist, ohne daß eine seitliche Einfüllöffnung für Glaslot an der Durchführungshülse 15 bzw. 415 vorgesehen werden muß. Stattdessen ist die Durchführungshülse über ihren Umfang geschlossen. Dies ist nicht nur mechanisch einfacher, sondern trägt auch dazu bei, daß die Glaslötung überall gleichmäßig hergestellt wird.

Wenn die fertige Glaslötung möglichst frei von mechanischer Spannung sein soll, werden für die Durchführungshülse und das Glaslot Materialien verwendet, die etwa den gleichen linearen thermischen Ausdehnungskoeffizienten wie der Lichtwellenleiter haben.

Wenn in der fertigen Glaslötung dagegen eine mechanische Druckvorspannung vorliegen soll, wodurch die Festigkeit gegen mechanische Belastungen erhöht werden kann, werden für die Durchführungshülse und das Glaslot Materialien verwendet, deren lineare thermische Ausdehnungskoeffizienten α_{D} bzw. α_{G} von dem Ausdehnungskoeffizienten α_{L} des Lichtwellenleiters entsprechend verschieden sind, insbesondere α_{D} > α_{G} > α_{L}.

## Patentansprüche

1. Vorrichtung mit einem flexiblen Lichtwellenleiter aus Glas und einer einstückigen, sich durch die Wand eines Gehäuses erstreckenden und hermetisch gegen die Wand abgedichteten Durchführungshülse zum hermetischen Durchführen des Lichtwellenleiters durch die Wand des Gehäuses, wobei der Lichtwellenleiter in einem ersten Abschnitt innerhalb der Durchführungshülse bis zu einem ersten Anschlag für die Schutzschicht von der vorzugsweise mehrlagigen und vorzugsweise aus Kunststoff bestehenden Schutzschicht umhüllt ist, wobei an dem Endbereich des aus dem Gehäuse herausragenden Teils der Durchführungshülse, wo der von der Schutzschicht umhüllte Lichtwellenleiter in die Durchführungshülse eintritt, ein Entlastungsabschnitt vorgesehen ist, längs dessen die den Lichtwellenleiter umhüllende Schutzschicht mittels eines Klebers an der Durchführungshülse befestigt ist, und wobei der Lichtwellenleiter in einem zweiten Abschnitt innerhalb der Durchführungshülse von der Schutzschicht befreit ist und in diesem zweiten Abschnitt in einem Abdichtbereich mittels einer Glaslötung mit der Durchführungshülse hermetisch abgedichtet verbunden ist und wobei im Endabschnitt am austrittsseitigen Ende des in das Innere des Gehäuses hineinragenden Teils der Durchführungshülse Mittel für die Zentrierung des Lichtwellenhleiters beim Austritt in das Gehäuseinnere vorgesehen sind,
dadurch gekennzeichnet,
daß die Glaslötung (27; 427) mit ihrer nach außen weisenden Stirnseite unmittelbar an einem zweiten Anschlag (53;453) anliegt und sich bis zu einem Endabschnitt am austrittsseitigen Ende des in das Innere des Gehäuses hineinragenden Teils der Durchführungshülse (15; 415) in ein Glaslotrohr (39; 439) fortsetzt, welches den Zwischenraum zwischen dem von seiner Schutzschicht befreiten Lichtwellenleiter abschnitt (23; 423) und der Innenfläche der Durchführungshülse ausfüllt und nicht mit dem Lichtwellenleiter verschmolzen ist.

2. Vorrichtung nach Anspruch 1, dadurch gekennzeichnet, daß als Mittel für die Zentrierung des Lichtwellenleiters eine diesen im Bereich des austrittsseitigen Endes umhüllende dünne innere Lage der Schutzschicht (33) vorgesehen ist, welche mit ihrem zur Gehäusewand weisenden Endabschnitt von dem in das Innere des Gehäuses weisenden Endabschnitt des Lotrohrs (39) umfaßt wird, wobei dieser Endabschnitt des Lotrohrs (41) nicht mit diesem Endabschnitt der Schutzschichtlage verschmolzen ist.

3. Vorrichtung nach Anspruch 1, dadurch gekennzeichnet, daß als Mittel für die Zentrierung des Lichtwellenleiters am in das Innere des Gehäuses weisenden austrittsseitigen Ende der Durchführungshülse ein zentrierender Einsatz (51) vorgesehen ist, wobei das austrittsseitige Ende des Glaslotrohres (439) gegen diesen zentrierenden Einsatz anliegt.

4. Vorrichtung nach jedem der vorhergehenden Ansprüche, dadurch gekennzeichnet, daß die Schutzschicht (13; 413) am eintrittsseitigen Ende des Lichtwellenleiters vom Abdichtbereich (17; 25; 417; 425) genügend beabstandet ist, um eine Beschädigung der Schutzschicht durch die bei Anbringung der Glaslötungen entwickelte Temperatur zu vermeiden.

5. Vorrichtung nach jedem der vorhergehenden Ansprüche, dadurch gekennzeichnet, daß die Glaslötung (27; 427) im wesentlichen frei von mechanischer Spannung ist .

6. Vorrichtung nach jedem der Ansprüche 1-4, dadurch gekennzeichnet, daß die Glaslötung (27; 427) unter Druckvorspannung steht.

7. Verfahren zur Herstellung der Vorrichtung nach den Ansprüchen 1-6 in den Schritten:
a) Befreien eines Abschnitts des Lichtwellenleiters (23; 423) von den Lagen der den Lichtwellenleiter umhüllenden Schutzschicht,
b) Aufschieben der Durchführungshülse (15; 415) mit dem Ende welches nach Positionierung der Durchführung durch die Gehäusewand nach außen stehen soll (43, 443), von dem von den Schutzschichtlagen befreiten Abschnitt (23; 423) des Lichtwellenleiters her auf den mit der Schutzschicht umhüllten Teil des Lichwellenleiters bis die am Übergang vom schutzschichtumhüllten Lichtwellenleiter zu dem von der Schutzschicht befreiten Teil des Lichtwellenleiters sich gebildete Stirnfläche der Schutzschicht am ersten Anschlag (47; 447) anliegt,
c) Einführen des Glaslotrohrs (39; 439) über das von der Schutzhülle befreite Ende des Lichtwellenleiters (23;423) her in die Durchführungshülse bis das Glaslotrohr am zweiten Anschlag (53; 453) anliegt, Erwärmen des den Abdichtbereich (25; 425) umfassenden Teils der Durchführungshülse bis das innen angrenzende Glaslotrohr (39; 439) über die Länge des Abdichtungsbereichs mit dem von seinen Lagen befreiten Lichtwellenleiter (23; 423) und mit der Innenfläche der Durchführungshülse hermetisch verschmolzen ist und Abkühlen des Abdichtbereichs (25; 425),
d) Einsetzen der Durchführungshülse in die dafür vorgesehene Öffnung in der Gehäusewand und Anbringen einer hermetischen Abdichtung (49, 449) zwischen Gehäusewand und Durchführungshülse und
e) Verkleben der Schutzschicht (13, 413) des Lichtwellenleiters innerhalb des Entlastungsabschnitts (29, 429) mit der Innenfläche der Durchführungshülse.

8. Verfahren nach Anspruch 7, dadurch gekennzeichnet, daß bei der Befreiung des Lichtwellenleiters von den Lagen der Schutzschicht in dem Bereich, welcher an das austrittsseitige Ende des in das Innere des Gehäuses weisenden Teils der Durchführungshülse zu liegen kommt, eine dünne innere Lage der Schutzschicht (33) stehen gelassen wird.

9. Verfahren nach Anspruch 7, dadurch gekennzeichnet, daß nach Schritt c) in das austrittsseitige Ende, welche in das Innere des Gehäuses weisen soll, ein zentrierender Einsatz (51) soweit eingeschoben wird bis er am Glaslotrohr (439) anliegt.

10. Verfahren nach den Ansprüchen 7-9, dadurch gekennzeichnet, daß ein längs geteiltes Glaslotrohr (39; 439) verwendet wird.

11. Verfahren nach jedem der Ansprüche 7-10, dadurch gekennzeichnet, daß ein Glaslotrohr (39; 439) verwendet wird, welches den Zwischenraum zwischen dem von seiner Schutzschicht befreiten Lichtwellenleiter (3; 403) und der Durchführungshülse (15; 415) möglichst vollständig ausfüllt.

12. Verfahren nach jedem der Ansprüche 7-11, dadurch gekennzeichnet, daß für die Durchführungshülse (15; 415) und das Glaslotrohr (39; 439) Materialien verwendet werden, die etwa den gleichen linearen thermischen Ausdehnungskoeffizienten wie der Lichtwellenleiter (3; 403) haben.

13. Verfahren nach jedem der Ansprüche 7-11, dadurch gekennzeichnet, daß für die Durchführungshülse (15; 415) und das Glaslotrohr (39; 439) Materialien verwendet werden, deren lineare thermische Ausdehnungskoeffizienten von demjenigen des Lichtwellenleiters (13; 413) derart verschieden sind, daß in der fertigen Glaslötung eine Druckspannung vorliegt.

14. Verfahren nach jedem der Ansprüche 7-13, dadurch gekennzeichnet, daß ein Glaslotrohr mit einer Verarbeitungstemperatur von 450° C verwendet wird.

15. Verfahren nach Anspruch 7, dadurch gekennzeichnet, daß die Durchführungshülse (15; 415) mit der Gehäusewand (5; 405) mittels metallischer Weichlötung, vorzugsweise mit einem SnPb-Lot bei einer Temperatur von 200-230° C, hermetisch dicht verbunden wird.

## Claims

1. Device having a flexible optical waveguide composed of glass and a single-piece grommet which extends through the wall of a housing and is hermetically sealed against the wall, for the purpose of hermetically feeding the optical waveguide through the wall of the housing, the optical waveguide being encased in a preferably multilayer protective covering, which is preferably composed of plastics material, over a first section up to a first stop for the protective covering inside the grommet, a stress-relief section being provided at the end region of that part of the grommet which projects out of the housing where the optical waveguide encased by the protective covering enters the grommet, over which stress-relief section the protective covering encasing the optical waveguide is attached to the grommet by means of an adhesive, and the optical waveguide being freed of the protective covering over a second section inside the grommet and being joined hermetically in a sealed manner to the grommet by means of a glass soldering in a sealing region in said second section, and means for centring the optical waveguide when it emerges into the interior of the housing being provided in the end section of the emergence end of that part of the grommet which projects into the interior of the housing at the emergence end, characterized in that the glass soldering (27; 427) rests, by means of the end face which points outwards, directly against a second stop (53; 453) and continues into a glass solder tube (39; 439) up to an end section at the emergence end of that part of the grommet (15; 415) which projects into the interior of the housing, which glass solder tube (39; 439) fills the gap between the optical-waveguide section (23; 423) freed from its protective covering and the internal surface of the grommet and is not fused to the optical waveguide.

2. Device according to Claim 1, characterized in that, as means for centring the optical waveguide, a thin internal layer of the protective covering (33) is provided which encases the optical waveguide in the region of the emergence end and whose end section pointing towards the housing wall is enclosed by the end section of the solder tube (39) pointing into the interior of the housing, said end section of the solder tube (41) not being fused to said end section of the protective-covering layer.

3. Device according to Claim 1, characterized in that, as means for centring the optical waveguide, a centring insert (51) is provided at the emergence end, pointing into the interior of the housing, of the grommet, the emergence end of the glass solder tube (439) resting against said centring insert.

4. Device according to any of the preceding claims, characterized in that the protective covering (13; 413) is sufficiently spaced apart from the sealing region (17; 25; 417; 425) at the entrance end of the optical waveguide to avoid damage to the protective covering as a result of the temperature developed during the provision of the glass solderings.

5. Device according to any of the preceding claims, characterized in that the glass soldering (27; 427) is essentially free of mechanical stress.

6. Device according to any of Claims 1-4, characterized in that the glass soldering (27; 427) is under compressive prestress.

7. Method for producing the device according to Claims 1-6 in the steps comprising:
a) freeing a section of the optical waveguide (23; 423) from the layers of the protective covering encasing the optical waveguide,
b) pushing on the grommet (15; 415) by the end which is to be on the outside of the housing wall (43, 443) after the feedthrough has been positioned onto that part of the optical waveguide encased with the protective covering starting from the section (23; 423) of the optical waveguide freed from the protective-covering layers until that end face of the protective covering formed at the transition from the protective-covering-encased optical waveguide to that part of the optical waveguide which is freed from the protective covering rests against the first stop (47; 447),
c) introduction of the glass solder tube (39; 439) over that end of the optical waveguide (23; 423) which is freed from the protective casing into the grommet until the glass solder tube rests against the second stop (53; 453), heating that part of the grommet enclosing the sealing region (25; 425) until the glass solder tube (39; 439) adjacent on the inside is hermetically fused to the optical waveguide (23; 423) freed from its layers and to the internal surface of the grommet over the length of the sealing region and cooling the sealing region (25; 425),
d) insertion of the grommet into that opening in the housing wall intended for the purpose and provision of a hermetic seal (49, 449) between housing wall and grommet, and
e) bonding of the protective covering (13, 413) of the optical waveguide to the internal surface of the grommet inside the stress-relief section (29, 429).

8. Method according to Claim 7, characterized in that during the freeing of the optical waveguide from the layers of the protective covering, a thin internal layer of the protective covering (33) is left intact in the region which finishes up at the emergence end of that part of the grommet which points into the interior of the housing.

9. Method according to Claim 7, characterized in that, after step c), a centring insert (51) is pushed into the emergence end, which is to point into the interior of the housing, far enough for it to rest against the glass solder tube (439).

10. Method according to Claims 7-9, characterized in that a longitudinally split glass solder tube (39; 439) is used.

11. Method according to any of Claims 7-10, characterized in that a glass solder tube (39; 439) is used which fills the gap between the optical waveguide (3; 403) freed from its protective covering and the grommet (15; 415) as completely as possible.

12. Method according to any of Claims 7-11, characterized in that, for the grommet (15; 415) and the glass solder tube (39; 439), materials are used which have approximately the same linear coefficient of thermal expansion as the optical waveguide (3; 403).

13. Method according to any of Claims 7-11, characterized in that, for the grommet (15; 415) and the glass solder tube (39; 439), materials are used whose linear coefficients of thermal expansion differ from that of the optical waveguide (13; 413) in such a way that a compressive stress is present in the finished glass soldering.

14. Method according to any of Claims 7-13, characterized in that a glass solder tube is used which has a processing temperature of 450°C.

15. Method according to Claim 7, characterized in that the grommet (15; 415) is joined in an hermetically sealed manner to the housing wall (5; 405) by means of a metallic soft soldering, preferably with an SnPb solder, at a temperature of 200-230°C.

## Revendications

1. Dispositif comportant un guide d'onde optique souple en verre et un manchon de traversée monobloc qui s'étend à travers la paroi d'un boîtier et est monté de manière étanche vis-à-vis de ladite paroi aux fins de réaliser une traversée parfaitement étanche du guide d'onde optique dans la paroi du boîtier, le guide d'onde optique dans un premier tronçon situé à l'intérieur du manchon de traversée étant entouré de l'enveloppe protectrice constituée de préférence de plusieurs couches, de préférence en matériau synthétique jusqu'à une première butée pour l'enveloppe protectrice, une partie de soulagement des contraintes étant prévue dans la région d'extrémité de la partie du manchon qui sort du boîtier, à l'endroit où le guide d'onde entouré de son enveloppe pénètre dans le manchon, partie de soulagement le long de laquelle l'enveloppe protectrice qui entoure le guide d'onde est liée au manchon au moyen d'un adhésif et le guide d'onde, dans un deuxième tronçon situé à l'intérieur du manchon de traversée étant débarrassé de son enveloppe protectrice et étant lié de manière parfaitement étanche au manchon de traversée au niveau de ce tronçon par l'intermédiaire d'une brasure de verre, dans une partie d'étanchéité, et des moyens étant prévus dans la partie d'extrémité côté sortie du manchon qui fait saillie à l'intérieur du boîtier pour centrer le guide d'onde à sa sortie dans le boîtier, caractérisé par le fait que la brasure de verre (27; 427) est directement en contact par sa face frontale tournée vers l'extérieur avec une deuxième butée (53; 453) et se prolonge en un tube de brasure de verre (39; 439) jusqu'à une partie terminale de l'extrémité côté sortie du manchon (15; 415) qui fait saillie à l'intérieur du boîtier, lequel tube de verre remplit l'espace entre le tronçon (23; 423) du guide d'onde optique débarrassé de son enveloppe et la surface intérieure du manchon de traversée et n'est pas soudé au guide d'onde.

2. Dispositif selon la revendication 1, caractérisé par le fait qu'il est prévu comme moyens pour le centrage du guide d'onde optique une couche intérieure (33) protectrice de faible épaisseur qui entoure ledit guide d'onde dans la région de son extrémité côté extérieur et qui, par sa partie terminale tournée vers la paroi du boîtier, est entourée par la partie terminale du tube de brasure (39) pénétrant à l'intérieur du boîtier, la partie terminale du tube de brasure (41) n'étant pas soudée à la partie terminale de la couche de protection.

3. Dispositif selon la revendication 1, caractérisé par le fait qu'il est prévu comme moyen de centrage du guide d'onde optique à l'extrémité côté sortie du manchon de traversée tournée vers l'intérieur du boîtier une pièce de centrage (51), l'extrémité côté sortie du tube de brasure de verre (439) étant appliquée contre cette pièce de centrage.

4. Dispositif selon l'une quelconque des revendications précédentes, caractérisé par le fait que l'enveloppe (13; 413), à l'extrémité côté entrée du guide d'onde optique est disposée à une distance de la partie d'étanchéité (17; 25; 417; 425) suffisante pour éviter une détérioration de l'enveloppe par la température résultant de l'application de la brasure de verre.

5. Dispositif selon l'une quelconque des revendications précédentes, caractérisé par le fait que la brasure de verre (27; 427) est sensiblement libre de contraintes mécaniques.

6. Dispositif selon l'une quelconque des revendications 1 à 4, caractérisé par le fait que la brasure de verre (27; 427) est soumise à une précontrainte de compression.

7. Procédé pour la réalisation du dispositif selon les revendications 1 - 6 comprenant les étapes suivantes:
a) on débarrasse un tronçon du guide d'onde optique (23; 423) des couches de l'enveloppe qui entoure ledit guide d'onde,
b) on enfile sur le tronçon du guide d'onde recouvert de son enveloppe, sur le côté de celui-ci débarrassé (23; 423) des couches protectrices, le manchon de traversée (15; 415) par son extrémité qui doit se trouver à l'extérieur (43; 443) après mise en place dans la paroi du boîtier, jusqu'à ce que la face frontale de l'enveloppe formée au niveau de la transition entre le tronçon de guide d'onde pourvu de son enveloppe et le guide d'onde débarrassé de son enveloppe vienne en contact avec une première butée (47; 447),
c) on enfile le tube de brasure de verre (39; 439) sur l'extrémité du guide d'onde optique (23; 423) débarrassée de l'enveloppe située dans le manchon de traversée jusqu'à ce que ledit tube de brasure de verre vienne en contact avec une deuxième butée (53; 453), on chauffe la partie du manchon de traversée qui entoure la partie d'étanchéité (25; 425) jusqu'à ce que le tube de brasure de verre (39; 439) situé à l'intérieur soit lié de manière étanche au guide d'onde optique (23; 423) débarrassé de ses couches et à la face interne du manchon de traversée, sur toute la longueur de la partie d'étanchéité, et on refroidit la partie d'étanchéité (25; 425).
d) on met en place le manchon de traversée dans l'ouverture prévue à cet effet dans la paroi du boîtier et on applique un joint (49; 449) étanche entre la paroi du boîtier et le manchon de traversée, et
e) on colle l'enveloppe (13, 413) du guide d'onde optique à l'intérieur du tronçon de soulagement des contraintes (29; 429) sur la paroi interne du manchon de traversée.

8. Procédé selon la revendication 7, caractérisé par le fait que lors de l'élimination des couches de l'enveloppe du guide d'onde optique dans la région qui vient en contact avec l'extrémité côté sortie de la partie du manchon de traversée située à l'intérieur du boîtier, on laisse une couche intérieure de faible épaisseur de l'enveloppe (33).

9. Procédé selon la revendication 7, caractérisé par le fait qu'après l'étape (c) on enfile dans l'extrémité côté sortie située à l'intérieur du boîtier une pièce (51) de centrage jusqu'à ce que celle-ci vienne en contact avec le tube de brasure de verre (439).

10. Procédé selon les revendications 7 - 9, caractérisé par le fait que l'on utilise un tube de brasure de verre (39; 439) qui est fendu dans la direction longitudinale.

11. Procédé selon l'une quelconque des revendications 7 - 10, caractérisé par le fait que l'on utilise un tube de brasure de verre (39; 439) qui remplit le plus parfaitement possible l'espace entre le guide d'onde (3; 403) débarrassé de son enveloppe et le manchon de traversée (15; 415).

12. Procédé selon l'une quelconque des revendications 7 - 11, caractérisé par le fait que l'on utilise pour le manchon de traversée (15; 415) et pour le tube de brasure de verre (39; 439) des matériaux qui présentent sensiblement le même coefficient de dilatation thermique linéaire que le guide d'onde optique (3; 403).

13. Procédé selon l'une quelconque des revendications 7 - 11, caractérisé par le fait que l'on utilise pour le manchon de traversée (15; 415) et pour le tube de brasure de verre (39; 439) des matériaux dont le coefficient de dilatation thermique diffère de celui du guide d'onde optique (13; 413) de manière telle que l'on obtienne une précontrainte de compression dans la brasure de verre terminée.

14. Procédé selon l'une quelconque des revendications 7 - 10, caractérisé par le fait que l'on utilise un tube de brasure de verre avec une température de travail de 450°C.

15. Procédé selon la revendication 7, caractérisé par le fait qu'on lie de manière étanche le manchon de traversée (15; 415) à la paroi (5; 405) du boîtier au moyen d'une brasure métallique tendre, de préférence d'une brasure SnPb sous une température de 200-230 °C.
